# EUROPÄISCHE PATENTSCHRIFT

(11) **EP 1 991 382 B1**
(45) Veröffentlichungstag und Bekanntmachung des Hinweises auf die Patenterteilung: **16.03.2011**
(21) Anmeldenummer: 07701313.4
(22) Anmeldetag: 12.02.2007
(51) Int. Cl.: B23C 5/20

(54) **WENDESCHNEIDPLATTE, VERWENDUNG EINER SOLCHEN WENDESCHNEIDPLATTE IN EINEM FRÄSWERKZEUG SOWIE FRÄSWERKZEUG MIT DER WENDESCHEIDPLATTE**
INDEXABLE INSERT, USE OF THE INDEXABLE INSERT IN A MILLING TOOL AND MILLING TOOL WITH THE INDEXABLE INSERT
PLAQUETTE DE COUPE AMOVIBLE, UTILISATION DE LA PLAQUETTE DE COUPE DANS UNE FRAISE ET FRAISE AVEC LA PLAQUETTE DE COUPE

(30) Priorität: 07.03.2006 AT 3792006
(43) Veröffentlichungstag der Anmeldung: 19.11.2008
(73) Patentinhaber: BOEHLERIT GmbH & Co.KG., 8605 Kapfenberg (AT)
(72) Erfinder: KIRCHBERGER, Peter, A-3350 Haag (AT)
(74) Vertreter: Wirnsberger, Gernot
(86) Internationale Anmeldenummer: PCT/AT2007/000069
(87) Internationale Veröffentlichungsnummer: WO 2007/101281

(56) Entgegenhaltungen:
- EP-A1- 0 502 541
- WO-A-2005/028149
- WO-A-2005/075135
- WO-A1-03/074218
- DE-U1- 29 912 025
- RU-C1- 2 284 249
- US-A- 4 074 949

## Beschreibung

Die Erfindung bezieht sich auf eine Wendeschneidplatte für ein Fräswerkzeug gemäß dem Oberbegriff des Anspruchs 1. Eine solche Wendeschneidplatte ist aus der US 4,074,949 bekannt.

Genauer dargelegt, befasst sich die Erfindung mit einer Wendeschneidplatte für ein Fräswerkzeug zur Bearbeitung von Kurbel- oder Nockenwellen mit mindestens einer eine Bohrung aufweisenden Anlagefläche zur Festlegung an ein drehbares Werkzeugteil und mindestens einer mit den Seitenflächen Schneidkanten bildenden Spanfläche.

Weiters betrifft die Erfindung ein Fräswerkzeug, insbesondere zur Bearbeitung von Kurbel- oder Nockenwellen, und die Verwendung einer Schneidplatte in einem Fräswerkzeug zur Bearbeitung von Kurbel- oder Nockenwellen.

Schneidplatten für Fräswerkzeuge, insbesondere zur Bearbeitung von Kurbelwellen, haben zumeist einen Keilwinkel, das ist der Winkel an der Schneide von der Freifläche zur Spanfläche des Schneideinsatzes, von 90°. Im Fräswerkzeug eingebaut bedeutet dies, dass der Spanwinkel der Schneidplatte negativ ist und einen Wert von ca. -8° bis -12° aufweist. Der Fachmann bezeichnet dies als "negative (Platten-) Geometrie".

Im praktischen Einsatz des Fräswerkzeuges bewirkt ein Keilwinkel von 90° eine hohe Schneidhaltigkeit der Schneidplatte, die negative Geometrie verursacht jedoch große Schnittkräfte bei der Abspanung.

Große Schnittkräfte am Fräswerkzeug belasten jedoch den Getriebeantrieb des Fräsers hoch, wobei dieser spielfrei sein muss und keinerlei Ratterschwingungen zulassen darf.

Eine Verringerung der Schnittkräfte an einer Schneidplatte und somit eine Herabsetzung der Belastung des Fräserantriebes können, wie dem Fachmann bekannt ist, durch eine sogenannte positive Schneidengeometrie erreicht werden. Bei einem Spanwinkel von unter 90° ist dafür ein Keilwinkel der Schneidplatte an der Schneide von 82° bis 70° vorzusehen.

Es wurde schon versucht, Wendeschneidplatten mit einer von der Schneide allseits eingesenkten Spanmulde einzusetzen und derart eine positive Schneidengeometrie des Fräswerkzeuges zu schaffen. Diese Schneidengeometrie der Schneidplatte kann zwar weitgehend die Erwartungen hinsichtlich einer Verringerung der Schneidkräfte erfüllen und somit eine Herabsetzung der Belastung des spielfrei arbeitenden Werkzeugantriebes bewirken, hat jedoch die Nachteile einer aufwendigen Fertigung, einer geringen Schneidkantenhaltbarkeit und einer mit hohen Maßtoleranzen und unebenen bzw. unbearbeiteten gesinterten Auflageflächen behafteten Plattengeometrie.

Die Erfindung setzt sich nun zum Ziel, eine Wendeschneidplatte für ein Fräswerkzeug der eingangs genannten Art zu schaffen, welche im Werkzeug, insbesondere bei einer Bearbeitung von Kurbelwellen, eine hohe Spanabnahme mit verringerten Schnittkräften bewirkt, eine weitgehend positive Schneidengeometrie aufweist, den Spandruck auf die Spanflächen im Bereich der Schneide vermindert, hohe Fertigungsgenauigkeit besitzt und herstellungstechnisch hohe Wirtschaftlichkeit und Plattengüte sicherstellt.

Weiters liegt der Erfindung die Aufgabe zugrunde, ein Fräswerkzeug anzugeben, welches bei hoher Abspanleistung einen ruhigen Lauf mit verminderter Antriebsleistungsaufnahme besitzt.

Das erstgenannte Ziel wird durch eine Wendeschneidplatte gemäß dem Anspruch 1, und die Verwendung einer solchen Wendeschneidplatte gemäß dem Anspruch 14 erreicht.

Die mit der Erfindung erreichten Vorteile sind im Wesentlichen darin zu sehen, dass die Schneidkantenkontur auf die Kriterien einer hohen Spanabnahme beim Fräsen und für ein Wenden der Platte abgestimmt ist. Dabei ist die Spanfläche derart gestaltet, dass diese einerseits eine gewünschte Schneidengeometrie und Schneidkantenausbildung verwirklicht, andererseits eine sichere unverschiebbare Abstützung der Schneidplatte gewährleisten kann. Um einen für das Fräsen günstigen Schneidkonturverlauf zu schaffen, sind an zwei gegenüberliegenden Ecken Rundungen vorgesehen, wobei ein für eine positive Geometrie erforderlicher Keilwinkel in den Rundbereichen der Platte durch eine Winkelstellung des konkaven Spanflächengrundes zur Anlagefläche erzielt wird.

Gemäß einer bevorzugten Ausführungsform einer Schneidplatte nach der Erfindung weist der Keilwinkel κ (Kappa) der Schneidkante, gemessen senkrecht zum Keil- oder Muldengrund, einen Betrag von 50° bis 85° auf.

Ein derartiger Keilwinkel lässt eine vorteilhafte Positionierung der Schneidplatte im Fräser zu und erbringt eine hohe Schneidkantenhaltbarkeit bzw. eine geringe Gefahr von Schneidkantenausbrüchen in den hochbeanspruchten Zonen.

Wenn, wie mit Vorteil vorgesehen sein kann, die Schneidplatte beidseitig, bezogen auf die durchgehende Bohrung, gleich beabstandet gleich ausgeformte Spanflächen aufweist, ist ein Wenden mit einer Bereitstellung von insgesamt vier fertigungsneuen Schneidbereichen möglich.

Eine fertigungstechnisch günstige und insbesondere für eine Spanbildung vorzügliche Ausbildung einer Wendeschneidplatte nach der Erfindung kann dadurch erreicht werden, dass die Spanfläche normal auf den Keil- oder Muldengrund eine ebenflächige Keilform oder eine Muldenform mit einer geradlinigen Erzeugenden aufweist und durch spanende Bearbeitung, z.B. durch Schleifen, erstellt ist.

Ein von der Schneidkante an der Spanfläche ablaufender Span erfährt dabei nur einen durch eine Biegung verursachten geringen Druck gegen die Laufrichtung, so dass ein Verschleiß und die Wärmebelastung minimiert sind. Des Weiteren werden in günstiger Weise durch eine spanende Bearbeitung die Maßabweichungen der Schneidplatten gering gehalten und glatte Spanflächen für den Spanablauf geschaffen.

Die weitere Aufgabe der Erfindung wird durch ein Fräswerkzeug gemäß dem Anspruch 11 gelöst.

Die mit einem erfindungsgemäßen Fräswerkzeug erreichten Vorteile liegen im Wesentlichen darin, dass die Wendeschneidplatte auf einfache Weise derart eingebaut ist, dass in den Bereichen, wo die größte Spanabnahme erfolgt, eine positive Schneidengeometrie gegeben ist, die ihre Vorteile insbesondere in einer effizienten Abspanung mit geringem Spandruck und ratterfreiem Antrieb mit verminderter Leistung hat.

Mit Vorteil ist das Fräswerkzeug in einer Ausführungsform der Erfindung derart gestaltet, dass der Spanwinkel höchstens 20°, vorzugsweise höchstens 15°, beträgt.

Derart können Brüche der Schneide wirkungsvoll vermieden werden.

Im Folgenden wird die Erfindung anhand von lediglich einen Ausführungsweg darstellenden Zeichnungen näher erläutert.
Es zeigt
Fig. 1 eine Schneidplatte;
Fig. 2 eine Schneidplatte in Ansicht parallel zur Anlagefläche;
Fig. 3 eine Schneidplatte in Ansicht parallel zur Bohrungsachse;
Fig. 4 eine Schneidplatte in Draufsicht auf die Spanflächen;
Fig. 5 eine Schneidplatte in Ansicht parallel zu den Spanflächen;
Fig. 6 ein Fräswerkzeug im Ausschnitt mit separierter Schneidplatte.

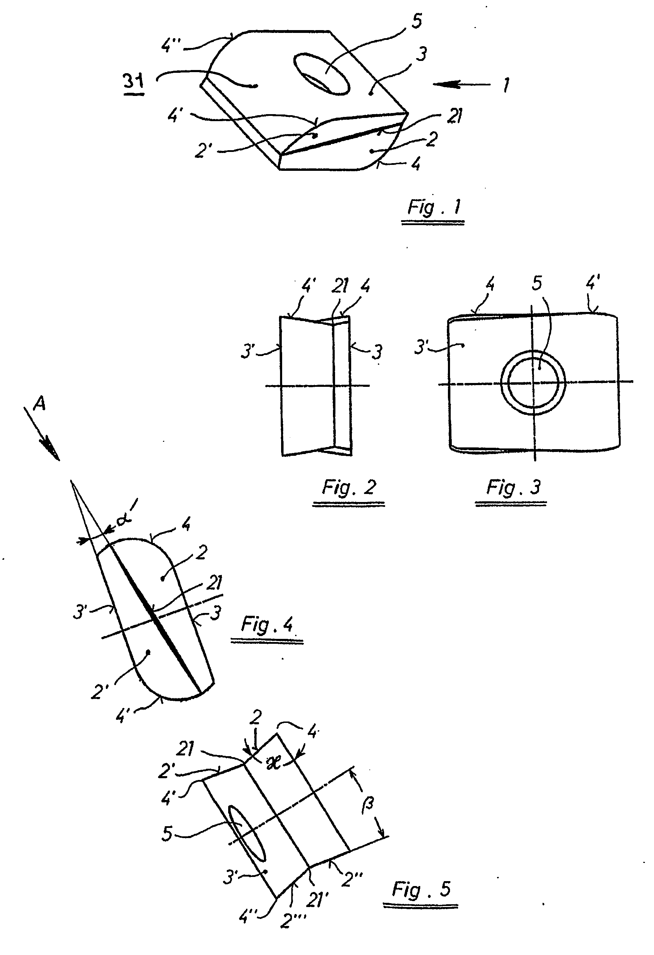

Fig. 1 zeigt eine Schneidplatte 1 mit einer Anlagefläche 3 an ein Werkzeug und mit einer durchgehenden Bohrung 5 zur Befestigung derselben an diesem. An die Anlagefläche 3 ist eine gerundete Seitenfläche 31 angeschlossen. Eine Tangential-Wendeschneidplatte 1 gemäß einer Ausführungsform der Erfindung besitzt stirnseitig eine ebene Spanfläche 2 und eine dergleichen Spanfläche 2', die miteinander eine konkave Stirnflächen-Keilform mit einem Keilgrund 21 bilden. Die Spanflächen 2,2' bilden mit den Anlageflächen 3,3' und den gerundeten Seitenflächen 31 Schneidkanten 4,4',4", welche diagonal gegenüberliegend eine Rundung aufweisen, wobei der Keilgrund 21 entgegengesetzt diagonal verläuft und derart im Rundungsbereich vergrößerte Spanflächen 2,2' gebildet sind.

In Fig. 2 ist in Ansicht eine Schneidplatte gemäß Fig. 1 parallel zu den Anlageflächen 3,3' gezeigt. Ein Keilgrund 21 verläuft schräg mit einem Winkel zu den Anlageflächen 3,3', wobei mit den Spanflächen Schneidkanten 4,4' gebildet werden.

Fig. 3 zeigt eine Schneidplatte gemäß Fig. 2, jedoch in einer um 90° gedrehten Ansicht in Richtung der Bohrung 5.

In Fig. 4 ist eine erfindungsgemäße Schneidplatte 1 in einer anlageflächenparallelen Draufsicht auf die Spanflächen 2,2', die einen Keilgrund 21 bilden, schematisch gezeigt.

Fig. 5 zeigt die Schneidplatte 1 in der Ansicht aus A in Richtung des Keilgrundes 21.

Der Keilgrund 21 verläuft mit einem Winkel α zur ebenen Anlagefläche 3' und spannt eine gegebenenfalls ebene Spanfläche 2' auf, welche zur Rundung der Seitenfläche hin vergrößert ist. Die Spanflächen 2,2' und die Schneidkanten 4,4' sind dabei zentrisch symmetrisch ausgebildet. In Draufsicht auf die Spanflächen 2,2' kann bei einer Länge von ca. 16 mm und einer Breite von ca. 6,5 mm der Wendeschneidplatte der Winkel α beispielsweise ca. 12° betragen.

Aus Fig. 5 ist eine konkave Keilform der Spanflächen 2,2' und gleich beabstandet zur Bohrung 5 jene der Spanflächen 2" und 2'" entnehmbar, welche jeweils einen Keilgrund 21 und 21' bilden. Senkrecht zu diesem Keilgrund 21, 21' spannen an den Schneiden 4,4',4",4"' die Anlageflächen 3,3' und die Spanflächen 2,2',2",2"' einen Keilwinkel κ (Kappa) auf.

Nach der Erfindung kann der Spanflächenbereich auch zylindrisch oder muldenförmig mit einer geradlinigen Erzeugenden ausgeführt sein, wobei sich im gerundeten Bereich der Schneidkanten 4,4',4",4"' gegebenenfalls ein unterschiedlicher Keilwinkel ergibt.

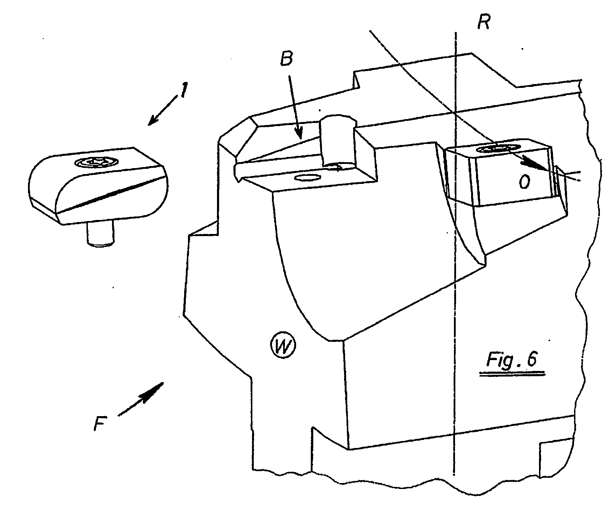

Fig. 6 zeigt einen Ausschnitt aus einem Fräswerkzeug F, welches senkrecht zum Radius R an einer Werkzeugaußenseite W eine Ausnehmung B für eine separat dargestellte erfindungsgemäße Wendeschneidplatte 1 aufweist. Durch 0 ist die Werkzeugbewegung gekennzeichnet.

## Patentansprüche

1. Wendeschneidplatte (1) für ein Fräswerkzeug, insbesondere zur Bearbeitung von Kurbel- oder Nockenwellen, mit mindestens einer eine durchgehende Bohrung (5) aufweisenden Anlagefläche (3, 3') zur Festlegung an ein drehbares Werkzeug und mindestens einer Spanfläche (2, 2'), wobei die Wendeschneidplatte (1) zumindest einseitig eine zentrisch symmetrische Schneidkantenkontur und die Spanfläche (2, 2') eine konkave Keil- oder Muldenform mit einem Winkel α des Keil- oder Muldengrundes (21) zur Anlagefläche (3, 3') aufweist, wobei die mindestens eine Spanfläche (2, 2') mit der Anlagefläche (3, 3') und einer an die Anlagefläche (3, 3') anschließenden gerundeten Seitenfläche eine Schneidkante (4, 4') bildet und in Draufsicht auf die Spanfläche (2, 2') an der Öffnungsseite des Winkels α die durch die Anlagefläche (3, 3') bzw. Seitenfläche und die Spanfläche (2, 2') gebildete Schneidkante (4, 4') gerundet ist, **dadurch gekennzeichnet, dass** der Keil- oder Muldengrund (21) zur Anlagefläche (3, 3') durchgehend beabstandet ist.

2. Wendeschneidplatte (1) nach Anspruch 1, **dadurch gekennzeichnet, dass** der Keilwinkel κ (Kappa) der Schneidkante (4, 4') gemessen senkrecht zum Keil- oder Muldengrund (21, 21') einen Betrag von 50° bis 85° aufweist.

3. Wendeschneidplatte (1) nach Anspruch 1 oder 2, **dadurch gekennzeichnet, dass** die Schneidplatte (1) beidseitig bezogen auf die durchgehende Bohrung (5) gleich beabstandet gleich ausgeformte Spanflächen (2, 2', 2", 2"') aufweist.

4. Wendeschneidplatte (1) nach einem der Ansprüche 1 bis 3, **dadurch gekennzeichnet, dass** die Spanfläche (2, 2') normal auf den Keil- oder Muldengrund (21) eine ebenflächige Keilform oder eine Muldenform mit einer geradlinigen Erzeugenden aufweist und durch spanende Bearbeitung, z.B. durch Schleifen, erstellt ist.

5. Wendeschneidplatte (1) nach einem der Ansprüche 1 bis 4, **dadurch gekennzeichnet, dass** zwei Anlageflächen (3, 3') vorgesehen sind.

6. Wendeschneidplatte (1) nach Anspruch 5, **dadurch gekennzeichnet, dass** die Anlageflächen (3, 3') eben ausgebildet sind.

7. Wendeschneidplatte (1) nach Anspruch 5 oder 6, **dadurch gekennzeichnet, dass** zwei gerundete Seitenflächen vorgesehen sind, welche an die Anlageflächen (3, 3') anschließen.

8. Wendeschneidplatte (1) nach Anspruch 7, **dadurch gekennzeichnet, dass** sich die Seitenflächen von den Anlageflächen (3, 3') bis zum Keil- oder Muldengrund (21) erstrecken und dort in weitere Seitenflächen übergehen, die in der jeweils gegenüberliegende Anlagefläche (3, 3') enden.

9. Wendeschneidplatte (1) nach einem der Ansprüche 1 bis 8, **dadurch gekennzeichnet, dass** die Spanfläche (2, 2') in Seitenansicht v-förmig ausgebildet ist.

10. Wendeschneidplatte (1) nach einem der Ansprüche 1 bis 9, **dadurch gekennzeichnet, dass** zwei gegenüberliegende Paare von Spanflächen (2, 2', 2", 2"') vorliegen, die durch zwei Anlageflächen (3, 3') und zwei Seitenflächen verbunden sind.

11. Fräswerkzeug, insbesondere zur Bearbeitung von Kurbel- oder Nockenwellen, **dadurch gekennzeichnet, dass** zumindest an einer Seite eines im Wesentlichen scheibenförmigen Werkzeugkörpers Wendeschneidplatten (1) gemäß einem der vorgeordneten Ansprüche derart angeordnet sind, dass deren Spanwinkel einen Wert Null oder größer als Null aufweist.

12. Fräswerkzeug nach Anspruch 11, **dadurch gekennzeichnet, dass** der Spanwinkel höchstens 20°, vorzugsweise höchstens 15° beträgt.

13. Fräswerkzeug nach Anspruch 11 oder 12, **dadurch gekennzeichnet, dass** die Wendeschneidplatten (1) tangential angeordnet sind.

14. Verwendung einer Wendeschneidplatte (1) nach einem der Ansprüche 1 bis 10 in einem Fräswerkzeug zur Bearbeitung von Kurbel- oder Nockenwellen.

## Claims

1. An indexable insert (1) for a milling cutter, in particular for machining crankshafts or camshafts, with at least one locating face (3, 3') with a through borehole (5) to be secured to a rotatable tool and at least one cutting face (2, 2'), wherein the indexable insert (1) has a central, symmetrical cutting edge contour on at least one side, and the cutting face (2, 2') has a concave wedge or trough shape with an angle α of the wedge or trough base (21) relative to the locating face (3, 3'), wherein the at least one cutting face (2, 2') forms a cutting edge (4, 4') with the locating face (3, 3') and a rounded lateral surface abutting the locating face (3, 3'), and the cutting edge (4, 4') formed by the locating face (3, 3') or lateral surface and the cutting face (2, 2') is rounded with the cutting face (2, 2') in top view on the opening side of angle α, **characterized in that** the wedge or trough base (21) is continuously spaced apart from the locating face (3, 3').

2. The indexable insert (1) according to claim 1, **characterized in that** the wedge angle κ (kappa) of the cutting edge (4, 4') measured perpendicular to the wedge or trough base (21, 21') measures 50° to 85°.

3. The indexable insert (1) according to claim 1 or 2, **characterized in that** both sides of the indexable insert (1) have cutting faces (2, 2', 2", 2"') that are identically shaped and spaced apart equally relative to the continuous borehole (5).

4. The indexable insert (1) according to one of claims 1 to 3, **characterized in that** the cutting face (2, 2') has a flat wedge shape or trough shape with a straight generatrix normally on the wedge or trough base (21), and is generated via machining, e.g., grinding.

5. The indexable insert (1) according to one of claims 1 to 4, **characterized in that** two locating faces (3, 3') are provided.

6. The indexable insert (1) according to claim 5, **characterized in that** the locating faces (3, 3') are flat in design.

7. The indexable insert (1) according to claim 5 or 6, **characterized in that** two rounded lateral surfaces are provided, which abut the locating faces (3, 3').

8. The indexable insert (1) according to claim 7, **characterized in that** the lateral surfaces extend from the locating faces (3, 3') up to the wedge or trough base (21), and there pass over into additional lateral surfaces, which end in the respectively opposing locating face (3, 3').

9. The indexable insert (1) according to one of claims 1 to 8, **characterized in that** the cutting face (2, 2') is v-shaped in design viewed from the side.

10. The indexable insert (1) according to one of claims 1 to 9, **characterized in that** two opposing pairs of cutting faces (2, 2', 2", 2"') are present, which are connected by two locating faces (3, 3') and two lateral surfaces.

11. A milling cutter, in particular for machining crankshafts or camshafts, **characterized in that** at least one side of an essentially disk-shaped tool body has indexable inserts (1) according to one of the preceding claims, arranged in such a way that its rake angle has a value of zero or greater than zero.

12. The milling cutter according to claim 11, **characterized in that** the rake angle measures at most 20°, preferably at most 15°.

13. The milling cutter according to claim 11 or 12, **characterized in that** the indexable inserts (1) are tangentially arranged.

14. Use of an indexable insert (1) according to one of claims 1 to 10 in a milling cutter for machining crankshafts or camshafts.

## Revendications

1. Plaquette réversible (1) pour un outil de fraisage, en particulier pour l'usinage de vilebrequins ou d'arbres à cames, comprenant au moins une face d'application (3, 3') présentant un alésage (5) continu pour la fixation sur un outil tournant et au moins une face de coupe (2, 2'), la plaquette réversible (1) présentant au moins sur un côté un contour d'arête de coupe symétrique de façon centrée et la face de coupe (2, 2') présentant une forme de clavette ou de cavité concave avec un angle α du fond de clavette ou du fond de cavité (21) par rapport à la face d'application (3, 3'), la au moins une face de coupe (2, 2') formant avec la face d'application (3, 3') et une face latérale arrondie, faisant suite à la face d'application (3, 3'), une arête de coupe (4, 4') et l'arête de coupe (4, 4'), formée par la face d'application (3, 3') ou la face latérale et la face de coupe (2, 2'), étant arrondie sur le côté d'ouverture de l'angle α en vue de dessus de la face de coupe (2, 2'), **caractérisée en ce que** le fond de clavette ou de cavité (21) est espacé de façon continue par rapport à la face d'application (3, 3').

2. Plaquette réversible (1) selon la revendication 1, **caractérisée en ce que** l'angle de clavette κ (kappa) de l'arête de coupe (4, 4') présente, mesuré perpendiculairement au fond de clavette ou au fond de cavité (21, 21'), une valeur de 50° à 85°.

3. Plaquette réversible (1) selon la revendication 1 ou 2, **caractérisée en ce que** la plaque de coupe (1) présente des deux côtés des faces de coupe (2, 2', 2", 2"') formées de façon identique et espacées de façon identique par rapport à l'alésage (5) continu.

4. Plaquette réversible (1) selon l'une quelconque des revendications 1 à 3, **caractérisée en ce que** la face de coupe (2, 2') présente perpendiculairement au fond de clavette ou au fond de cavité (21) une forme de clavette plane ou une forme de cavité avec une génératrice rectiligne et est élaborée par usinage avec enlèvement de copeaux, par exemple par rectification.

5. Plaquette réversible (1) selon l'une quelconque des revendications 1 à 4, **caractérisée en ce que** deux faces d'application (3, 3') sont prévues.

6. Plaquette réversible (1) selon la revendication 5, **caractérisée en ce que** les faces d'application (3, 3') sont conçues planes.

7. Plaquette réversible (1) selon la revendication 5 ou 6, **caractérisée en ce que** deux faces latérales arrondies sont prévues, lesquelles se raccordent aux faces d'application (3, 3').

8. Plaquette réversible (1) selon la revendication 7, **caractérisée en ce que** les faces latérales s'étendent depuis les faces d'application (3, 3') jusqu'au fond de clavette ou de cavité (21) et font place ici à d'autres faces latérales qui se terminent dans la face d'application (3, 3') respectivement opposée.

9. Plaquette réversible (1) selon l'une quelconque des revendications 1 à 8, **caractérisée en ce que** la face de coupe (2, 2') est formée en V en vue latérale.

10. Plaquette réversible (1) selon l'une quelconque des revendications 1 à 9, **caractérisée en ce que** deux paires se faisant face de faces de coupe (2, 2', 2", 2"') sont présentes, lesquelles sont reliées par deux faces d'application (3, 3') et deux faces latérales.

11. Outil de fraisage, en particulier pour l'usinage de vilebrequins ou d'arbres à cames, **caractérisé en ce qu'**au moins sur un côté d'un corps d'outil sensiblement en forme de disque sont disposées des plaquettes réversibles (1) selon l'une quelconque des revendications précédentes de telle sorte que leur angle de coupe présente une valeur nulle ou supérieure à zéro.

12. Outil de fraisage selon la revendication 11, **caractérisé en ce que** l'angle de coupe est au maximum de 20°, de préférence au maximum de 15°.

13. Outil de fraisage selon la revendication 11 ou 12, **caractérisé en ce que** les plaquettes réversibles (1) sont disposées de façon tangentielle.

14. Utilisation d'une plaquette réversible (1) selon l'une quelconque des revendications 1 à 10 dans un outil de fraisage pour l'usinage de vilebrequins ou d'arbres à cames.
